# EUROPÄISCHE PATENTSCHRIFT

(11) **EP 0 745 776 B1**
(45) Veröffentlichungstag und Bekanntmachung des Hinweises auf die Patenterteilung: **15.07.1998**
(21) Anmeldenummer: 96810277.2
(22) Anmeldetag: 30.04.1996
(51) Int. Cl.: F16B 13/14

(54) **Einsatzelement für eine Aufnahmebohrung**
Insert element for a receiving bore
Elément d'insertion pour un trou de réception

(30) Priorität: 01.06.1995 DE 19519514
(43) Veröffentlichungstag der Anmeldung: 04.12.1996
(73) Patentinhaber: HILTI Aktiengesellschaft, 9494 Schaan (LI)
(72) Erfinder: Ludwig, Wolfgang, 86830 Schwabmünchen (DE); Leibhard, Erich, 81476 München (DE)
(74) Vertreter: Wildi, Roland

(56) Entgegenhaltungen:
- DE-A- 2 525 579
- US-A- 4 968 185
- US-A- 5 104 266

## Beschreibung

Die Erfindung betrifft ein Einsatzelement für eine Aufnahmebohrung, insbesondere eine Siebhülse zum Einsatz in Verbindung mit pastösen Mörtelmassen, gemäss dem gattungsbildenden Oberbegriff des Patentanspruches 1.

Für Befestigungen in Hohlräume aufweisenden Verankerungsgründen, wie beispielsweise Hohlmauerwerk und ähnlichem, werden vielfach Verbundanker eingesetzt. Dazu wird zunächst im Verankerungsgrund eine Aufnahmebohrung erstellt, diese gereinigt und danach ein Einsatzelement in Form einer Siebhülse aus Metall oder aus Kunststoff in die Aufnahmebohrung eingesetzt. Die Siebhülse weist eine siebartig durchbrochene Aussenwandung auf. Nach dem Einsetzen der Siebhülse wird diese mit einer definierten Menge einer pastösen Mörtelmasse gefüllt. Als Mörtel kommen ein- oder mehrkomponentige Systeme zum Einsatz. Die Siebhülse hat die Aufgabe, die pastöse Mörtelmasse am unkontrollierten Ausfliessen aus der Aufnahmebohrung in die an die Aufnahmebohrung angrenzenden Hohlräume des Verankerungsgrundes zu hindem. Gleichwohl wird während des Verfüllens der Aufnahmebohrung ein Teil der Mörtelmasse durch die siebartig durchbrochene Aussenwandung der Siebhülse in diese Hohlräume gepresst; der hindurchgetretene Mörtel bleibt aber aufgrund seiner Viskosität mit der innerhalb der Siebhülse verbleibenden Mörtelmasse verbunden und fliesst nicht weg. Nach dem Einbringen der Mörtelmasse wird eine Ankerstange oder eine Ankerhülse in die gefüllte Aufnahmebohrung eingesetzt. Nach dem Aushärten der Mörtelmasse bilden die Ankerstange bzw. die Ankerhülse einen Verbund. Der Verbund Anker/Mörtel ist in der Aufnahmebohrung durch Formschluss und Verbundbildung zwischen der Mörtelmasse und dem Verankerungsgrund gehalten. Dabei wird der Formschluss durch den aus der Siebhülse in die an die Aufnahmebohrung angrenzenden Hohlräume gepressten, ausgehärteten Anteil der Mörtelmasse gebildet.

Um eine zuverlässige Verankerung zu gewährleisten, muss die Aufnahmebohrung vor dem Einsetzen des Einsatzelementes in einem separaten Arbeitsschritt von Bohrstaub gereinigt werden. Dazu sind aus dem Stand der Technik spezielle Ausblaseinrichtungen bekannt, mit deren Hilfe die Aufnahmebohrung gereinigt werden kann. Allerdings ist dieser zusätzliche Reinigungsschritt zeitaufwendig und erfordert in der Regel zusätzliches Werkzeug am Einsatzort. Zwar ist in der DE-A-25 25 579 eine Hülse beschrieben, welche an ihrer Aussenwandung mit vorstehenden Krallen versehen ist, die neben einer Vorfixierung der Hülse in der Aufnahmebohrung auch eine gewisse Reinigung der Bohrlochwandung bewirken sollen. Jedoch werden mit diesen Krallen allenfalls grössere Verunreinigungen von der Bohrlochwandung abgeschabt. Eine eigentliche Reinigung vom Bohrstaub erfolgt nicht. Deshalb muss auch bei der Verwendung einer Hülse mit Krallen die Aufnahmebohrung in der Regel zuvor gereinigt werden.

Der vorliegenden Erfindung liegt daher die Aufgabe zugrunde, das Setzen von Verbundankern in Hohlräume aufweisenden Verankerungsgründen zu vereinfachen und den dafür erforderlichen Zeitaufwand zu reduzieren. Auf zusätzliche Werkzeuge und Hilfsmittel zum Reinigen der Aufnahmebohrung soll verzichtet werden können.

Gemäss der Erfindung werden diese Aufgaben durch ein Einsatzelement gelöst, welches die im kennzeichnenden Abschnitt des Patentanspruches 1 aufgeführten Merkmale aufweist. Das erfindungsgemässe Einsatzelement für eine Aufnahmebohrung umfasst einen etwa zylindrischen Hohlkörper, der an seinem einen Ende verschlossen ist und am entgegengesetzten Ende zur Aufnahme eines Verankerungselementes ausgebildet ist. Die Wandungen des Hohlkörpers sind siebartig durchbrochen. Zur Reinigung der Aufnahmebohrung beim Einschieben des Einsatzelementes ist an der Aussenwandung des Hohlkörpers wenigstens ein umlaufender Streifen eines elastischen, offenporigen Materials vorgesehen. Durch den an der Aussenwandung des Einsatzelementes angebrachten, umlaufenden Streifen eines elastischen, offenporigen Materials wird die Aufnahmebohrung während des Hineinschiebens des Einsatzelementes gereinigt. Durch seine Elasitzität kann sich das offenporige Material an die Wandung der Aufnahmebohrung anlegen und den Bohrstaub in Richtung des Grundes der Aufnahmebohrung schieben. Durch die Offenporigkeit des Materialstreifens wird ein Grossteil des Bohrstaubes im Materialstreifen aufgenommen. Dadurch wird die Aufnahmebohrung zuverlässig vom Bohrstaub gereinigt, und es kann sich keine Trennschicht zwischen der Wandung der Aufnahmebohrung und der Mörtelmasse bilden. Die Reinigung der Aufnahmebohrung von Bohrstaub erfolgt gleichzeitig mit dem Einschieben des Einsatzelementes. Es ist kein zeitaufwendiger, separater Arbeitsschritt für die Reinigung der Aufnahmebohrung erforderlich. Auf zusätzliches Werkzeug für die Reinigung der Aufnahmebohrung kann verzichtet werden.

Es ist vorteilhaft, wenn der Materialstreifen in der das verschlossene Ende aufweisenden Hälfte des Hohlkörpers, vorzugsweise angrenzend an das verschlossene Ende, angeordnet ist. Auf diese Weise wird die Aufnahmebohrung über einen wesentlichen Teil ihrer Tiefe gereinigt und es ist sichergestellt, dass der nicht von den Poren des Materialstreifens aufgenommene Bohrstaub zum Grund der Aufnahmebohrung vorgeschoben wird.

Der Materialstreifen weist bevorzugt eine Dicke auf, die derart bemessen ist, dass er beim Einsetzen des Einsatzelementes in die Aufnahmebohrung auf maximal 2/3 seiner Ausgangsdicke zusammengepresst wird, wobei diese Dicke vorzugsweise etwa 3 - 5 mm beträgt. Auf diese Weise kann das Einsatzelement noch leicht eingeschoben werden und andererseits wird der elastische Materialstreifen nur soweit komprimiert, dass seine offenen Poren noch ausreichend Bohrstaub aufnehmen können.

Es erweist sich als vorteilhaft für die Reinigungswirkung des an der Aussenwandung des Einsatzelementes angebrachten Materialstreifens, wenn seine Minimalbreite seine Dicke nicht unterschreitet. Die maximale Breite des Materialstreifens entspricht etwa 1/10 bis etwa 1/5 der Länge des Hohlkörpers. Anstelle eines einzigen umlaufenden Materialstreifens können auch mehrere umlaufende Materialstreifen hintereinander angeordnet sein. Dabei entspricht die Summe der Breiten der Materialstreifen maximal etwa 1/10 bis etwa 1/5 der Länge des Hohlkörpers. Auf diese Weise steht noch genügend Oberfläche des Einsatzelementes für die Halterung in der Aufnahmebohrung zur Verfügung.

Im Falle mehrerer umlaufender Materialstreifen sind mit Vorteil alle in der das verschlossene Ende aufweisenden Hälfte des Hohlkörpers angeordnet. Auf diese Weise wird die Aufnahmebohrung über einen wesentlichen Teil ihrer Tiefe gereinigt und es ist sichergestellt, dass der nicht von den Poren des Materialstreifens aufgenommene Bohrstaub zum Grund der Aufnahmebohrung vorgeschoben wird. Durch die hintereinander angeordneten Materialstreifen wird die Bohrlochwandung bereichsweise wiederholt gereinigt, was den Reinigungseffekt noch weiter unterstützt.

Die umlaufenden Materialstreifen bestehen vorzugsweise aus einem offenporigen Schaumstoff mit einer Raumdichte von etwa 20 - 40 kg/m³. Die umlaufenden Materialstreifen sind vorzugsweise mit der Aussenwandung des Hohlkörpers verklebt oder zwischen an der Aussenwandung des Hohlkörpers vorgesehenen Anschlägen angeordnet. Auf diese Weise sind sie gegen ein axiales Verschieben beim Einsetzen des Einsatzelementes in die Aufnahmebohrung gesichert.

Im folgenden wird die Erfindung anhand eines schematisch dargestellten Ausführungsbeispieles näher erläutert. Es zeigen:
- Fig. 1: ein erfindungsgemäss ausgebildetes Einsatzelement im teilweisen Längsschnitt; und
- Fig. 2: das Einsatzelement aus Fig. 1 in einer Aufnahmebohrung.

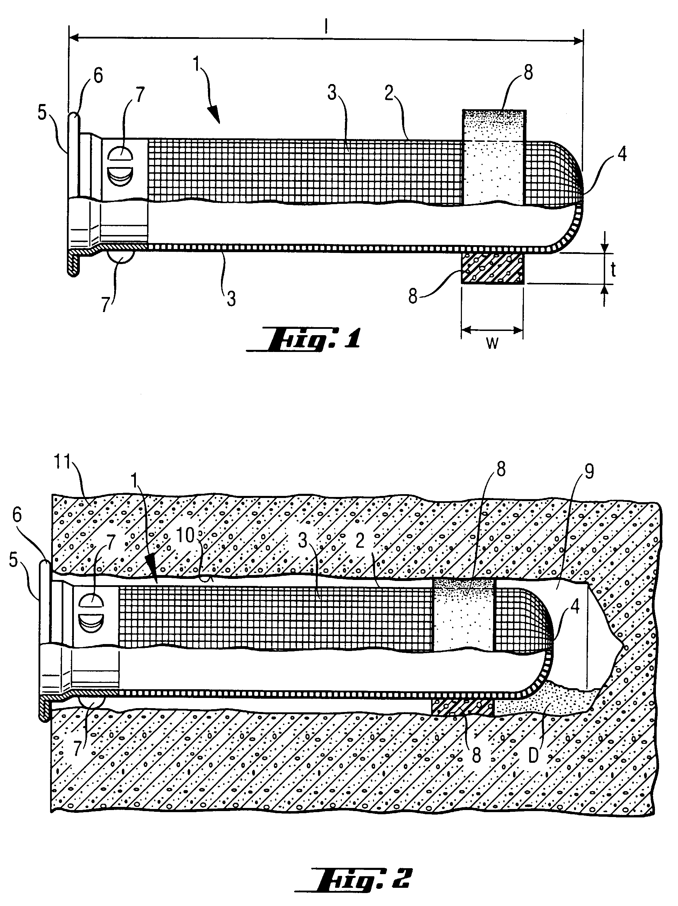

Ein Ausführungsbeispiel des erfindungsgemässen Einsatzelements für eine Aufnahmebohrung ist in Fig. 1 im teilweisen Längsschnitt dargestellt und gesamthaft mit dem Bezugszeichen 1 versehen. Das Einsatzelement 1 ist insbesondere als Siebhülse ausgebildet und umfasst einen etwa zylindrischen Hohlkörper 2 mit gitterartig durchbrochenen Wandungen 3. Die siebartige Ausbildung des Hohlkörpers 2 ist aus Gründen der besseren Übersicht in der oberen Hälfte des in Fig. 1 dargestellten Ausführungsbeispiels des Einsatzelementes 1 nur durch ein Gitter 3 angedeutet. Der Hohlkörper 2 weist ein abgeschlossenes vorderes Ende 4 und ein offenes rückwärtiges Ende 5 auf, durch welches eine ein- oder mehrkomponentige Mörtelmasse und ein Verankerungsmittel in den Hohlkörper 2 eingebracht wird.

An seinem rückwärtigen Ende 4 weist der Hohlkörper 2 einen verbreiterten umlaufenden Kragen 6 auf, der beim Einschieben des Einsatzelementes 1 als Anschlag an der Oberfläche des Verankerungsgrundes dient und verhindert, dass das Einsatzelement 1 zu tief in die Aufnahmebohrung eingeschoben wird. Unterhalb des Kragens 6 sind an der Aussenwandung des Hohlkörpers 2 elastische Lappen 7 angebracht, welche das Einsatzelement 1 bei Überkopf-Montage in Position halten und gegen ein Herausfallen aus der Aufnahmebohrung sichem.

In der das vordere geschlossene Ende 4 des Hohlkörpers 2 aufweisenden Hälfte ist nahe dem geschlossenen Ende 4 ein umlaufender Streifen 8 eines elastischen, offenporigen Materials angebracht. Das Material ist bevorzugt ein elastischer Schaumstoff mit einer Raumdichte von etwa 20 - 40 kg/m³. Die Dicke t des Schaumstoffstreifens 8 ist derart bemessen, dass er beim Einsetzen des Einsatzelementes 1 in die Aufnahmebohrung auf maximal 2/3 seiner Ausgangsdicke t zusammengepresst wird. Vorzugsweise beträgt die Dicke etwa 3 - 5 mm. Die maximale Breite w des Schaumstoffstreifens 8 entspricht etwa 1/10 bis etwa 1/5 der Länge I des Hohlkörpers 2, vorzugsweise etwa 10 mm.

Während in Fig. 1 ein Einsatzelement 1 mit einem einzelnen Schaumstoffstreifen 8 dargestellt ist, versteht es sich, dass auch mehrere umlaufende Schaumstoffstreifen an der gitterartig durchbrochenen Wandung 3 des Hohlkörpers 2 vorgesehen sein können. Diese sind gleichfalls bevorzugt in der vorderen Hälfte des Hohlkörpers angeordnet. Die Breite der einzelnen Schaumstoffstreifen ist in diesem Fall derart bemessen, dass die Summe der Breiten aller Schaumstoffstreifen maximal etwa 1/10 bis etwa 1/5 der Länge I des Hohlkörpers 2 entspricht. Die minimale Breite w jedes Schaumstoffstreifens 8 wird bevorzugt derart gewählt, dass sie seine Dicke t nicht unterschreitet.

Die Befestigung jedes Schaumstoffstreifens an der Wandung des Hohlkörpers 2 erfolgt beispielsweise durch Verkleben. Die einzelnen Schaumstoffstreifen können aber auch zwischen in den Fig. nicht dargestellten Anschlägen an der Wandung des Hohlkörpers 2 angeordnet sein und derart gegen ein Verschieben gesichert sein.

Fig. 2 zeigt das Einsatzelement 1 aus Fig. 1 in einer Aufnahmebohrung 9 in einem Verankerungsgrund 11. Bei dem Verankerungsgrund 11 kann es sich um ein Hohlräume aufweisendes Mauerwerk handeln, es kann aber auch durch einen Volluntergrund, beispielsweise einen Kalksandlochstein, gebildet sein. Wie aus der Darstellung ersichtlich, legt sich der Schaumstoffstreifen 8 in der vorderen Hälfte des Einsatzelementes 1 aufgrund seiner Elastizität an die Wandung 10 der Aufnahmebohrung 9 an und gleicht Unregelmässigkeiten der Aufnahmebohrung aus. Dadurch ist sichergestellt, dass Bohrstaub D von der Wandung 10 der Aufnahmebohrung 9 abgestreift wird und sich derjenige Anteil des Bohrstaubes D, der nicht von den offenen Poren des Schaumstoffstreifens 8 aufgenommen wird, in Richtung des Grundes der Aufnahmebohrung 9 vorgeschoben wird. Dadurch kann sich keine Trennschicht zwischen der Wandung 10 der Aufnahmebohrung 9 und der eingefüllten und aushärtenden Mörtelmasse bilden.

Während die Erfindung am Beispiel einer Siebhülse mit siebartig durchbrochener Wandung erläutert wurde, versteht es sich, dass die erfindungsgemässe Anordnung von wenigstens einem Schaumstoffstreifen in der vorderen Hälfte des Hohlkörpers auch bei Einsatzelementen erfolgen kann, die beispielsweise aus Kunststoff oder aus Blech gefertigt sind und deren Wandungen mit Lochungen oder ähnlichen Durchtrittsöffnungen für eine eingefüllte Mörtelmasse ausgestattet sind.

Durch den an der Aussenwandung des Einsatzelementes angebrachten, umlaufenden Streifen eines elastischen, offenporigen Materials wird die Aufnahmebohrung während des Hineinschiebens des Einsatzelementes gereinigt. Durch seine Elasitzität kann sich das offenporige Material an die Wandung der Aufnahmebohrung anlegen und den Bohrstaub in Richtung des Grundes der Aufnahmebohrung schieben. Durch die Offenporigkeit des Materialstreifens wird ein Grossteil des Bohrstaubes im Materialstreifen aufgenommen. Dadurch wird die Aufnahmebohrung zuverlässig vom Bohrstaub gereinigt, und es kann sich keine Trennschicht zwischen der Wandung der Aufnahmebohrung und der Mörtelmasse bilden. Die Reinigung der Aufnahmebohrung von Bohrstaub erfolgt gleichzeitig mit dem Einschieben des Einsatzelementes. Es ist kein zeitaufwendiger, separater Arbeitsschritt für die Reinigung der Aufnahmebohrung erforderlich. Auf zusätzliches Werkzeug für die Reinigung der Aufnahmebohrung kann verzichtet werden. Dadurch wird das Setzen eines Verbundankers vereinfacht, und der dafür erforderliche Zeitaufwand wird reduziert.

## Patentansprüche

1. Einsatzelement für eine Aufnahmebohrung mit einem etwa zylindrischen Hohlkörper (2), der an seinem einen Ende (4) verschlossen ist und am entgegengesetzten Ende (5) zur Aufnahme eines Verankerungselementes ausgebildet ist und siebartig durchbrochene Wandungen (3) aufweist, wobei der Hohlkörper (2) an seiner Aussenwandung Mittel zum Reinigen der Aufnahmebohrung (9) aufweist, **dadurch gekennzeichnet**, dass die Mittel zum Reinigen der Aufnahmebohrung (9) durch wenigstens einen an der Aussenwandung des Hohlkörpers (2) angebrachten, umlaufenden Streifen (8) eines elastischen, offenporigen Materials gebildet sind.

2. Vorrichtung nach Anspruch 1, dadurch gekennzeichnet, dass der Materialstreifen (8) in der das verschlossene Ende (4) aufweisenden Hälfte des Hohlkörpers (2), vorzugsweise angrenzend an das verschlossene Ende (4), angeordnet ist.

3. Vorrichtung nach Anspruch 1 oder 2, dadurch gekennzeichnet, dass der Materialstreifen (8) eine Dicke (t) aufweist, die derart bemessen ist, dass er beim Einsetzen des Einsatzelementes (1) in die Aufnahmebohrung (9) auf maximal 2/3 seiner Ausgangsdicke (t) zusammengepresst wird, wobei diese Dicke (t) vorzugsweise etwa 3 - 5 mm beträgt.

4. Vorrichtung nach Anspruch 3, dadurch gekennzeichnet, dass der Materialstreifen (8) eine Breite (w) aufweist, welche seine Dicke (t) nicht unterschreitet.

5. Vorrichtung nach einem der vorangehenden Ansprüche, dadurch gekennzeichnet, dass der Materialstreifen (8) eine maximale Breite (w) aufweist, die etwa 1/10 bis etwa 1/5 der Länge (I) des Hohlkörpers (2) entspricht.

6. Vorrichtung nach einem der vorangehenden Ansprüche, dadurch gekennzeichnet, dass mehrere umlaufende Materialstreifen (8) hintereinander angeordnet sind, wobei die Summe der Breiten der Materialstreifen (8) maximal etwa 1/10 bis etwa 1/5 der Länge (I) des Hohlkörpers (2) entspricht.

7. Vorrichtung nach Anspruch 6, dadurch gekennzeichnet, dass alle Materialstreifen (8) in der das verschlossene Ende (4) aufweisenden Hälfte des Hohlkörpers (2) angeordnet sind.

8. Vorrichtung nach einem der vorangehenden Ansprüche, dadurch gekennzeichnet, dass jeder umlaufende Materialstreifen (8) ein Streifen eines offenporigen Schaumstoffes mit einer Raumdichte von etwa 20 - 40 kg/m³ ist.

9. Vorrichtung nach einem der vorangehenden Ansprüche, dadurch gekennzeichnet, dass jeder umlaufende Materialstreifen (8) durch Verkleben mit der Aussenwandung des Hohlkörpers (2) oder durch an der Aussenwandung des Hohlkörpers (2) vorgesehene Anschläge gegen axiales Verschieben gesichert ist.

## Claims

1. Insert element for a receiving bore, having an approximately cylindrical hollow body (2) which is closed at one end (4) and is designed for receiving an anchoring element at the opposite end (5) and has walls (3) which are perforated in a manner of a screen, means for cleaning the receiving bore (9) being provided on the outer wall of the hollow body (2), characterized in that the means for cleaning the receiving bore (9) are formed by at least one encircling strip (8) which is fitted on the outer wall of the hollow body (2) and consists of an elastic, open-pored material.

2. Arrangement according to Claim 1, characterized in that the material strip (8) is arranged in that half of the hollow body (2) which contains the closed end (4), preferably adjacent to the closed end (4).

3. Arrangement according to Claim 1 or 2, characterized in that the material strip (8) has a thickness (t) which is dimensioned such that, when the insert element (1) is inserted into the receiving bore (9), it is compressed to not more than 2/3 of its initial thickness (t), said thickness (t) preferably being approximately 3-5 mm.

4. Arrangement according to Claim 3, characterized in that the material strip (8) has a width (w) which is no less than its thickness (t).

5. Arrangement according to one of the preceding claims, characterized in that the material strip (8) has a maximum width (w) which corresponds approximately to 1/10 to approximately 1/5 of the length (1) of the hollow body (2).

6. Arrangement according to one of the preceding claims, characterized in that a plurality of encircling material strips (8) are arranged one behind the other, the sum of the widths of the material strips (8) corresponding to not more than approximately 1/10 to approximately 1/5 of the length (1) of the hollow body (2).

7. Arrangement according to Claim 6, characterized in that all the material strips (8) are arranged in that half of the hollow body (2) which contains the closed end (4).

8. Arrangement according to one of the preceding claims, characterized in that each encircling material strip (8) is a strip of an open-pored foam material with a density of approximately 20 - 40 kg/m³.

9. Arrangement according to one of the preceding claims, characterized in that each encircling material strip (8) is secured against axial displacement by being adhesively bonded to the outer wall of the hollow body (2) or by stops provided on the outer wall of the hollow body (2).

## Revendications

1. Elément d'insertion pour un trou de réception, comprenant un corps creux (2) sensiblement cylindrique qui est fermé à l'une de ses extrémités (4) et conformé à l'extrémité opposée (5) pour la réception d'un élément d'ancrage, et qui présente des parois (3) ajourées à la manière d'un tamis, le corps creux (2) comportant sur sa paroi extérieure des moyens pour le nettoyage du trou de réception (9), **caractérisé en ce** que les moyens pour le nettoyage du trou de réception (9) sont constitués par au moins une bande circulaire (8) d'un matériau élastique à pores ouverts prévue sur la paroi extérieure du corps creux (2).

2. Dispositif selon la revendication 1, caractérisé en ce que la bande de matériau (8) est disposée dans la moitié du corps creux (2) comportant l'extrémité fermée (4), de préférence au voisinage de l'extrémité fermée (4).

3. Dispositif selon la revendication 1 ou 2, caractérisé en ce que la bande de matériau (8) présente une épaisseur (t) choisie de telle façon que, lors de la mise en place de l'élément d'insertion (1) dans le trou de réception (9), elle est comprimée au maximum aux 2/3 de son épaisseur initiale (t), cette épaisseur (t) étant de préférence d'environ 3 à 5 mm.

4. Dispositif selon la revendication 3, caractérisé en ce que la bande de matériau (8) présente une largeur (w) qui n'est pas inférieure à son épaisseur (t).

5. Dispositif selon l'une des revendications précédentes, caractérisé en ce que la bande de matériau (8) présente une largeur maximale (w) qui correspond à environ 1/10 à environ 1/5 de la longueur (l) du corps creux (2).

6. Dispositif selon l'une des revendications précédentes, caractérisé en ce que plusieurs bandes de matériau (8) circulaires sont prévues les unes derrière les autres, la somme des largeurs des bandes de matériau (8) correspondant au maximum à environ 1/10 à environ 1/5 de la longueur (l) du corps creux (2).

7. Dispositif selon la revendication 6, caractérisé en ce que toutes les bandes de matériau (8) sont disposées dans la moitié du corps creux (2) qui comprend l'extrémité fermée (4).

8. Dispositif selon l'une des revendications précédentes, caractérisé en ce que chaque bande de matériau circulaire (8) est une bande d'une mousse à pores ouverts avec une densité en volume d'environ 20 à 40 kg/m³.

9. Dispositif selon l'une des revendications précédentes, caractérisé en ce que chaque bande de matériau circulaire (8) est bloquée en translation axiale par collage sur la paroi extérieure du corps creux (2) ou par des butées prévues sur la paroi extérieure du corps creux (2).
